# EUROPÄISCHE PATENTSCHRIFT

(11) **EP 0 643 641 B1**
(45) Veröffentlichungstag und Bekanntmachung des Hinweises auf die Patenterteilung: **23.04.1997**
(21) Anmeldenummer: 94908931.2
(22) Anmeldetag: 22.03.1994
(51) Int. Cl.: B29C 47/08

(54) **VERFAHREN UND EINRICHTUNG ZUM AUTOMATISIERTEN AUSSTOSS VON SCHNECKEN**
METHOD AND DEVICE FOR THE AUTOMATED EJECTION OF AN EXTRUSION WORM
PROCEDE ET DISPOSITIF PERMETTANT D'EJECTER AUTOMATIQUEMENT DES VIS SANS FIN

(30) Priorität: 02.04.1993 CH 1024/93
(43) Veröffentlichungstag der Anmeldung: 22.03.1995
(73) Patentinhaber: BUEHLER AG, 9240 Uzwil (CH)
(72) Erfinder: MANSER, Josef, CH-9240 Uzwil (CH)
(86) Internationale Anmeldenummer: CH9400060
(87) Internationale Veröffentlichungsnummer: WO9422657

(56) Entgegenhaltungen:
- DE-B- 1 230 553
- DE-B- 1 268 367
- FR-A- 1 126 621
- GB-A- 893 597
- GB-A- 2 174 950

## Beschreibung

Die Erfindung betrifft ein Verfahren und eine Vorrichtung zum automatisierten Ausstoss von Schnecken nach den Oberbegriffen der Ansprüche 1 und 4.

Die Erfindung ist insbesondere auf das automatisierte Ausstossen von Schnecken gerichtet, die in Schneckenpressen zur Herstellung von Teig und Teigwaren eingesetzt werden, wobei die Schneckenpressen mit schwenkbar angeordneten Mischknetern verbunden sein können.

Es ist allgemein üblich, Press- und Förderschnecken zum Zweck der Reinigung oder des verschleissbedingten Ersatzes aus dem Zylinder einer Schneckenpresse zu entnehmen. Bekannt sind hierzu spindel-betätigte Abzieh- bzw. Ausstossvorrichtungen sowie hydraulisch betätigte Ab- bzw. Ausziehvorrichtungen mit einem bzw. zwei Zylindern. So beschreibt die DE-AS-1268367 eine Vorrichtung zum Ausstossen der Schnecke aus dem Presszylinder einer Schneckenstrangpresse. Hierbei wird eine Druckstange mit dem Hydraulikkolben einer Schneckeneinstellvorrichtung mittels einer mechanischen Kupplung verbunden. Die Kupplung nimmt die Druckstange jeweils nur in der Schneckenausstossrichtung mit. Zudem ist die Druckstange mit Mitnehmern versehen, deren Abstand etwa dem Kolbenhub entspricht. Die Schnecke wird mit mehreren Hüben aus dem Zylinder ausgestossen. Diese Vorrichtung ist mechanisch und räumlich sehr aufwendig. Die mit zunehmender Hubzahl steigende freie Kraglänge ist nicht gestützt, was zum Verkanten und Beschädigen der Schnecke führen kann.

Aus der DE-AS-1230553 ist eine Schneckenausstossvorrichtung beschrieben. Die Schneckenausstossvorrichtung beruht darauf, dass bei Anwendung einer an dem Schaft der Förderschnecke mittels einer Kolbenstange angreifenden hydraulischen Ausstossvorrichtung, deren Druckzylinder zum Druckkolben der für den Axialhub der Förderschnecke vorgesehene hydraulischen Druckvorrichtung gebildet ist.

In der Europäischen Patentanmeldung Nr. 271399 sind ein Verfahren und eine Vorrichtung zur Montage und Demontage von Extruderschnecken beschrieben. Die Extruderschnecken werden zwar fixiert transportiert und gelagert, jedoch ist das vorgesehene Handling mittels Lastaufnahme- und Anschlagmittel sehr umständlich.

Bekannt ist es auch, Schneckenwellen zur Temperierung mit axialen Bohrungen zu versehen (DD-PS 200079), die jedoch zur Beaufschlagung mit höheren Drücken ungeeignet sind.

Der Erfindung liegt daher die Aufgabe zugrunde, die Nachteile des bekannten Standes der Technik zu vermeiden und ein automatisiertes und funktionssicheres Ausstossen von Schnecken zu erreichen.

Dies erfolgt nach den Merkmalen des Anspruchs 1, besonders vorteilhaft ausgestaltet nach den Merkmalen der Ansprüche 2 bis 3. Der Erfindung liegt weiterhin die Aufgabe zugrunde, eine Einrichtung zur Ausübung des Verfahrens zu entwickeln, was mit den Merkmalen des Anspruchs 4 realisiert ist.

Mittels der Erfindung können vorteilhaft auch Doppelschneckenextruder mit dichtkämmenden Wellen, Kochextruder und dergleichen, auch bei Anwendung von Vielkeilwellen u.a. ausgestossen werden.

Die Merkmale der Erfindung sind an Hand des in der Zeichnung schematisch dargestellten Ausführungsbeispiels näher beschrieben.

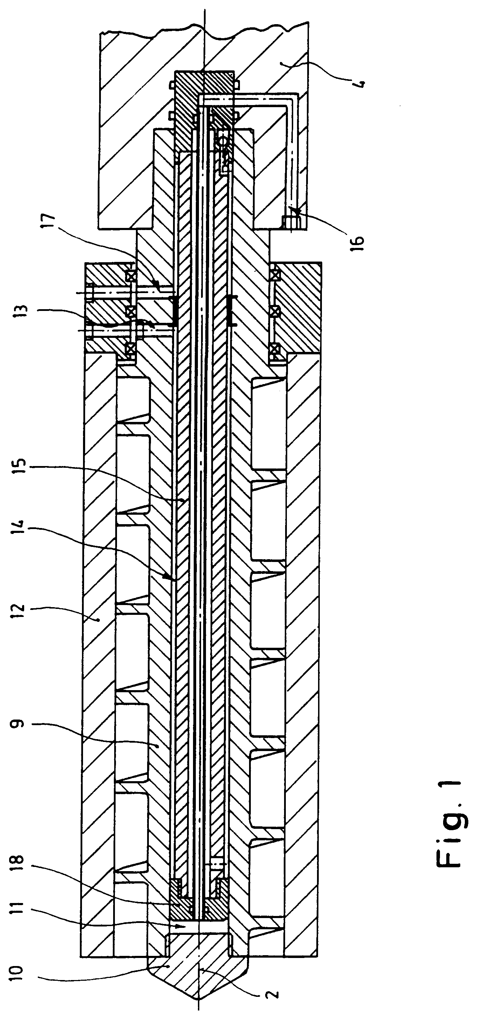

Es zeigen die
- Fig. 1: eine Schneckenpresse mit einer Ausstossstange einer Schnecke in einer Detaildarstellung und

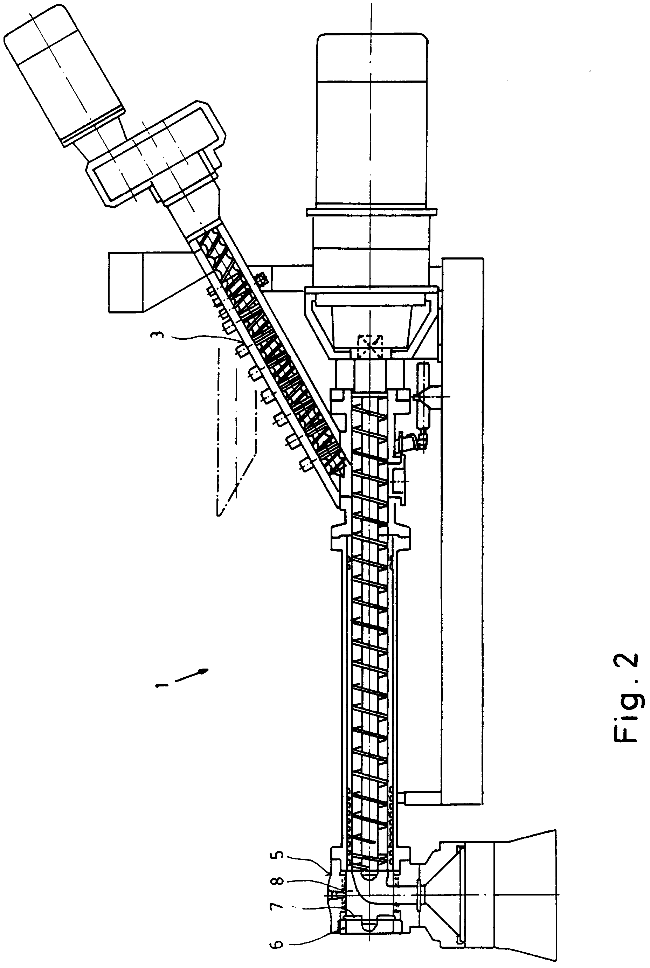

- Fig. 2: die Schneckenpresse in einer Übersichtsdarstellung.

Die erfindungsgemässe Einrichtung zum automatischen Schneckenausstoss beinhaltet im wesentlichen eine Schneckenpresse 1 mit einer Schnecke 9. Die Schnecke 9 ist mit einer axialen Bohrung 14 zur Aufnahme und Führung einer Ausstossstange 15 versehen. Die Ausstossstange 15 ist in einer Antriebswelle 4 der Schneckenpresse 1 abgestützt. Die Wandung der Bohrung 14 sowie die Stirnflächen eines Kopfstückes 10 und der Ausstossstange 15 bilden eine Kammer 11 zum Aufbau des Ausstossdruckes, wobei die Hydraulikflüssigkeit über eine Zulaufbohrung 16 eingeleitet wird.

Bevor die Schnecke 9 aus dem Zylinder 12 der Schneckenpresse 1 entnommen werden kann, wird eine, im Kopfteil 5 der Schneckenpresse 1 befindliche Mutter 6 hydraulisch in bekannter Weise (nicht dargestellt) um 45° gedreht, um ein, mittels eines Bajonettverschlusses 7 fixiertes Umlenkteil 8 freizugeben. Dieses kann in axialer Richtung mit der Schnecke 9 ausgestossen werden und gibt seinerseits den Zugang zur Schnecke 9 frei, so dass diese nun weiter ausgestossen werden kann.

Über die Zulaufbohrung 16 wird nun die Kammer 11 in der axialen Bohrung 14 der Schnecke 9 hydraulisch (Wasser) mit einem Überdruck beaufschlagt. Die Kammer 11 wird von der Wandung der Bohrung 14, dem Kopfstück 10 und dem Stirnteil 18 der Ausstossstange 15 begrenzt. Da die Ausstossstange 15 in der Schneckenpresse 1 fest angeordnet bzw. abgestützt ist, wird die Schnecke 9 durch den Druck gegen das Kopfstück 10 aus dem Zylinder 12 in einem Zug ausgestossen. Die Ausstossgeschwindigkeit kann mit üblichen Steuerungsmitteln variiert werden. Über die Beaufschlagung einer Ablaufbohrung 13 ist es möglich, die Ausstossstange 15 vor einem Reinigungsvorgang der Schnecke 9 wieder einzuziehen.

Ein Ausstossen der Schnecke 9 ist damit zu jedem erforderlichen Zeitpunkt "auf Knopfdruck" möglich.

Im Betriebszustand dienen Ablaufbohrungen 13 und 17 der Zirkulation eines Temperierungsmittels in der Bohrung 14, wobei wiederum Wasser verwendet wird.

In einer Einrichtung sind so Ausstossen und Temperieren kombinierbar.

Darüberhinaus ist es möglich, die Schnecke 9 an ihrem Kopfstück 10 mittels einer nicht dargestellten Spannzange zu umfassen und so eine zusätzliche Führung zu erreichen bzw. das Ausstossen zu unterstützen. Diese Spannzange kann in üblicher Weise mechanisch oder hydraulisch betätigt werden. Die Schnecke kann bei unterschiedlichen Arbeitshöhen der Schneckenpresse sowohl im Flur- als auch im Überflurbetrieb mittels üblicher Handhabetechnik für einen Reinigungsvorgang gehandhabt werden.

## Patentansprüche

1. Verfahren zum automatischen Ausstoss einer Schnecke (9) aus dem Zylinder (12) einer Schneckenpresse (1), dadurch gekennzeichnet, dass in einer axialen Bohrung (14) der Schnecke (9) mittels einer, über eine Zulaufbohrung (16) zugeführte Hydraulikflüssigkeit ein Überdruck, gegen eine Ausstossstange (15) in einer Kammer (11) wirkend aufgebracht wird, bis die Schnecke (9) ganz oder teilweise aus dem Zylinder (12) ausgestossen ist.

2. Verfahren nach Anspruch 1, dadurch gekennzeichnet, dass als Hydraulikflüssigkeit Wasser verwendet wird.

3. Verfahren nach Anspruch 1 und 2, dadurch gekennzeichnet, dass die Schnecke (9) an einem Kopfstück (10) vor Beginn des Ausstossens umfasst wird.

4. Einrichtung zur Durchführung des Verfahrens nach mindestens einem der vorherigen Ansprüche 1 bis 3, mit einer in einem Zylinder (12) einer Schneckenpresse (1) gelagerten Schnecke (9), die mit einer Antriebswelle (4) lösbar gekuppelt ist,
dadurch gekennzeichnet, dass die Schnecke (9), die ein Kopfteil (10) aufweist, eine axiale Bohrung (14) zur Aufnahme und Führung einer Ausstossstange (15) aufweist, wobei die Ausstossstange (15) mit der Antriebswelle (4) der Schneckenpresse (1) fest verbunden ist und das von der Wandung der Bohrung (14), einer der Bohrung (14) zugewandten Stirnfläche des Kopfstücks (10) und einer dem Kopfstück (10) zugewandten Stirnfläche der Ausstossstange (15) eine Kammer (11) gebildet ist, in der der erforderliche Ausstossdruck aufgebaut wird.

5. Einrichtung nach Anspruch 4, dadurch gekennzeichnet, dass die Schnecke (9) im Betriebszustand über die axiale Bohrung (14) sowie Ablaufbohrungen (13, 17) mit hydraulischen Mitteln temperiert ist.

## Claims

1. A method of automatically ejecting a screw (9), which comprises a header piece (10), of an extrusion press (1), characterised in that an overpressure, which acts against an ejection rod (15) in a chamber (11), is applied in an axial bore (14) of the screw (9) by means of a hydraulic fluid fed in via an admission bore (16), until the screw (9) is completely or partially ejected from the barrel (12).

2. A method according to claim 1, characterised in that water is used as the hydraulic fluid.

3. A method according to claims 1 and 2, characterised in that the screw (9) is embraced at a header piece (10) before the start of the ejection.

4. A device for carrying out the method according to at least one of the preceding claims 1 to 3, having a screw (9) which is mounted in a barrel (12) of an extrusion press (1) and which is detachably coupled to a drive shaft (4),
characterised in that the screw (9), which comprises a header piece (10), has an axial bore (14) for the receipt and guidance of an ejection rod (15), wherein the ejection rod (15) is fixedly attached to the drive shaft (4) of the extrusion press (1), and that a chamber (11) in which the requisite ejection pressure is built up is formed from the wall of the bore (14), from an end face, which faces the bore (14), of the header piece (1), and from an end face, which faces the header piece (10), of the ejection rod (15).

5. A device according to claim 4, characterised in that in its operating state the temperature of the screw (9) is controlled with hydraulic media via the axial bore (14) and via discharge bores (13, 17).

## Revendications

1. Procédé destiné à l'éjection automatique d'une vis sans fin (9) du cylindre (12) d'une presse à vis sans fin (1), caractérisé en ce que dans un alésage axial (14) de la vis sans fin (9), est établie, au moyen d'un fluide hydraulique amené par l'intermédiaire d'un perçage d'alimentation (16), une pression agissant dans une chambre (11) à l'encontre d'une tige d'éjection (15), jusqu'à ce que la vis sans fin (9) soit totalement ou partiellement éjectée du cylindre (12).

2. Procédé selon la revendication 1, caractérisé en ce qu'en guise de fluide hydraulique on utilise de l'eau.

3. Procédé selon les revendications 1 et 2, caractérisé en ce que la vis sans fin (9) est enserrée au niveau d'une pièce de tête (10), avant le début de l'éjection.

4. Dispositif de mise en oeuvre du procédé selon l'une au moins des revendications précédentes 1 à 3, comprenant une vis sans fin (9) montée dans un cylindre (12) d'une presse à vis sans fin (1), et couplée de manière amovible à un arbre d'entraînement (4), caractérisé en ce que la vis sans fin (9), qui présente une pièce de tête (10), comporte un alésage axial (14) destiné à recevoir et à guider une tige d'éjection (15), la tige d'éjection (15) étant reliée de manière fixe à l'arbre d'entraînement (4) de la presse à vis sans fin (1), et en ce que la paroi de l'alésage (14), une face frontale de la pièce de tête (10), dirigée vers l'alésage (14), et une face frontale de la tige d'éjection (15), dirigée vers la pièce de tête (10), forment une chambre (11) dans laquelle est établie la pression d'éjection nécessaire.

5. Dispositif selon la revendication 4, caractérisé en ce que dans l'état de fonctionnement, la vis sans fin (9) est tempérée et égalisée en température à l'aide de moyens hydrauliques, par l'intermédiaire de l'alésage axial (14) ainsi que de perçages d'écoulement (13, 17).
